# FASCICULE DE BREVET EUROPEEN

(11) **EP 0 998 008 B1**
(45) Date de publication et mention de la délivrance du brevet: **16.07.2008**
(21) Numéro de dépôt: 99402589.8
(22) Date de dépôt: 20.10.1999
(51) Int. Cl.: H02J 7/35

(54) **Dispositif d'alimentation électrique à générateur solaire et batterie**
Stromversorgungsvorrichtung mit Solargenerator und Batterie
Electric supply device with solar generator and battery

(30) Priorité: 21.10.1998 FR 9813194
(43) Date de publication de la demande: 03.05.2000
(73) Titulaire: EADS ASTRIUM SAS, 31402 Toulouse Cedex 4 (FR)
(72) Inventeur: Barde, Henri, 31000 Toulouse (FR); Weinberg, Simon, Letchworth, S4 62 TY (GB)
(74) Mandataire: Loisel, Bertrand

(56) Documents cités:
- BE-A- 853 124
- GB-A- 2 211 679
- US-A- 4 494 063
- US-A- 5 025 202
- US-A- 5 617 002

## Description

La présente invention concerne les dispositifs d'alimentation électrique utilisant comme source un générateur solaire et comportant une batterie. Un tel dispositif trouve une application particulièrement importante, bien que non exclusive, dans le domaine des satellites artificiels placés sur une orbite terrestre basse. De tels satellites passent périodiquement dans l'ombre portée de la terre, en général une fois à chaque révolution, ce qui rend leurs générateurs solaires inopérants.

Il existe déjà des dispositifs d'alimentation électrique embarqués sur satellite, comprenant un générateur solaire en plusieurs sections individuellement connectables à une barre de puissance (ou ligne bus de puissance) par des commutateurs, ainsi qu'une batterie d'accumulateurs et un condensateur de lissage.

Dans ce dispositif connu, la fourniture de courant par le générateur solaire à la barre de puissance est commandée par un régulateur à commutation séquentielle, fonctionnant par cycle limite, en tout ou rien. Un cycle de mises en service et hors service alternées d'une des sections s'établit aussi longtemps que le générateur solaire est apte à maintenir une tension de consigne sur la barre. Au contraire, les moyens de décharge de la batterie sur la barre de puissance comportent une régulation à asservissement linéaire, afin de maintenir la tension de la barre de puissance à une valeur déterminée lorsque la batterie alimente la barre. Le dispositif est complété par un condensateur de filtrage de faible valeur (de l'ordre du milliFarad), permettant de limiter à une valeur faible les variations de tension de la barre de puissance, dues à la commutation des sections du générateur solaire et servant de dispositif de stockage d'énergie pour le régulateur à découpage associé à la batterie. L'énergie stockée par un tel condensateur étant très faible, le cycle d'interruption et d'établissement des liaisons entre la barre et le générateur solaire est court. En conséquence, les moyens commutateurs et le régulateur doivent avoir des fréquences de fonctionnement élevées obligeant à utiliser des composants performants, donc complexes et coûteux.

Un tel dispositif est connu par exemple du document US-A-5 617 002.

La présente invention vise notamment à fournir un dispositif d'alimentation électrique conduisant à une fréquence de commutation réduite et notablement plus simple que les dispositifs antérieurs.

L'invention utilise pour cela la disponibilité de condensateurs, dits « super capacités » présentant, sous un volume et un poids déterminés, une capacité supérieure de plusieurs ordres de grandeur à la capacité des condensateurs classiques, même électrolytiques. Ces condensateurs sont de type électrolytique. Ils comportent, entre leurs électrodes, un électrolyte et on les fait fonctionner sous une tension insuffisante pour qu'il se produise une électrolyse. Des charges se rassemblent aux interfaces, sous une épaisseur inférieur au nanomètre, et constituent l'équivalent d'un condensateur. Du fait de la faible épaisseur du diélectrique, la capacité peut être extrêmement élevée. Sur certains condensateurs de ce genre maintenant disponibles, on arrive à plusieurs milliers de mètres carrés de surface développée par gramme de matière active, ce qui explique les résultats obtenus.

L'invention propose en conséquence un dispositif d'alimentation électrique de charges ayant une barre de puissance, un générateur solaire en plusieurs sections individuellement connectables à la barre par des commutateurs et une batterie d'accumulateurs reliée à la barre par des moyens lui permettant d'alimenter la barre, caractérisé en ce que la barre est reliée en permanence à un condensateur de stockage d'énergie dit « super capacité » ayant une capacité d'au moins 0,1 F et en ce que lesdits moyens comprennent au moins un module de décharge commandé en tout ou rien par un régulateur qui commande également lesdits commutateurs.

Dans la pratique, on utilisera généralement, pour les besoins d'un satellite en orbite basse, un condensateur de un à plusieurs Farad présentant une résistance série et une inductance très faibles. On arrive ainsi à des cycles d'ouverture et de fermeture des commutateurs et des modules de décharge à une fréquence allant de quelques dizaines de Hertz à quelques milliHertz.

Dans un mode avantageux de réalisation, le dispositif comprend plusieurs modules commandés séquentiellement et constituant des générateurs de courant constant. Des résultats particulièrement satisfaisants sont obtenus en constituant lesdits modules de façon qu'ils fonctionnent en élévateur de tension de la batterie dans toutes les conditions de fonctionnement. Cela implique que la force électromotrice de la batterie à pleine charge reste inférieure à la plus basse tension acceptable sur la barre de puissance.

Le régulateur est prévu pour mettre en service successivement des sections additionnelles du générateur solaire au fur et à mesure qu'elles sont nécessaires pour maintenir la tension de la barre de puissance à une valeur de consigne. Pour cela, le régulateur peut comporter des moyens pour fournir un signal d'erreur représentatif de la différence entre la tension courante sur la barre et une tension de référence et des comparateurs de mise en service successive d'un nombre croissant de sections, puis des modules, suivant le signal d'erreur.

La batterie peut être alimentée soit à partir de la barre de puissance, soit à partir d'un générateur solaire auxiliaire, à travers un régulateur sensible à la tension aux bornes de la batterie et au courant qui la traverse, de façon à éviter un courant excessif.

Les caractéristiques ci-dessus apparaîtront mieux à la lecture de la description qui suit d'un mode particulier de réalisation de l'invention, donné à titre d'exemple non limitatif. La description se réfère aux dessins qui l'accompagnent, dans lesquels :
- la figure 1 est un synoptique du dispositif ;
- la figure 2 est un synoptique montrant une constitution possible du régulateur du dispositif de la figure 1.

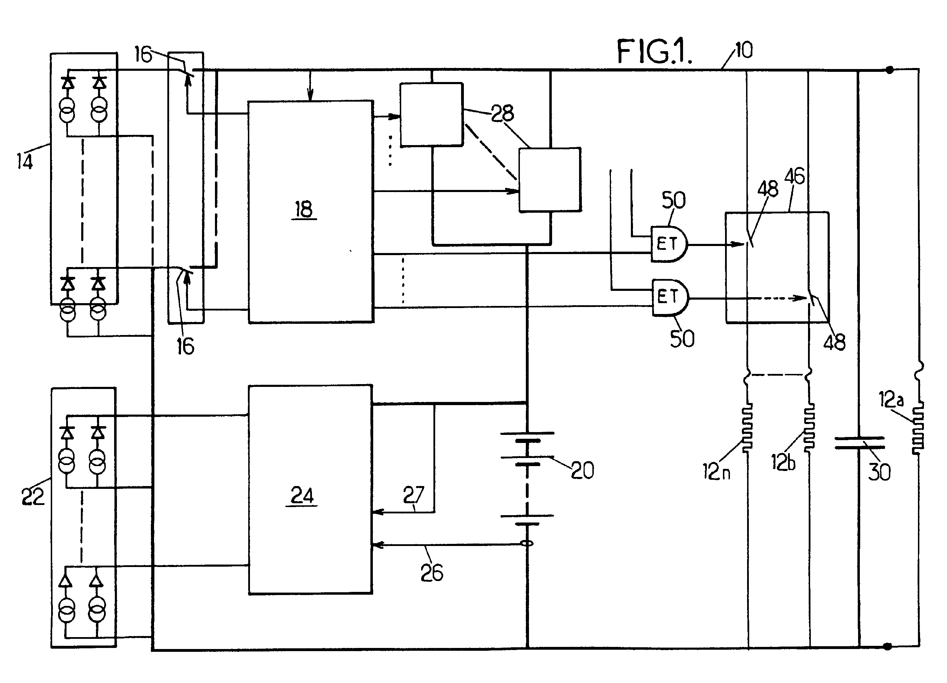

La figure 1 montre, en traits épais, la barre de puissance ou ligne bus de puissance 10 du dispositif. Cette ligne bus alimente des charges telles que 12a appartenant au satellite et des charges interruptibles, 12b, ..., 12n.

La source de puissance du dispositif est constituée par un générateur solaire 14 fractionné en plusieurs sections munies chacune d'un organe permettant d'établir et d'interrompre la fourniture de puissance d'une section du générateur solaire 14, par ouverture du circuit, par mise en court-circuit ou par dérivation. Sur la figure 1, ces organes sont représentés par des interrupteurs 16 d'établissement et de rupture de la liaison entre les sections du générateur solaire et la barre de puissance. Dans la pratique, ces commutateurs seront généralement constitués par des transistors à effet de champ de type MOS, dits MOS-FET.

Un régulateur 18 commande la fourniture de puissance par le générateur solaire. Il commande les commutateurs 16 suivant un processus de commutation séquentielle permettant uniquement de mettre en service et hors service un nombre variable de sections du générateur solaire 14, afin de maintenir la tension V de la barre d'alimentation à une valeur de consigne Vc.

Le dispositif comprend également une ou plusieurs batteries électrochimiques 20, permettant de maintenir l'alimentation de la barre de puissance pendant les éclipses et de participer à l'absorption des pointes de consommation, dépassant la capacité de fourniture par le générateur solaire. Dans le cas illustré sur la figure 1, la batterie est maintenue en charge par un générateur solaire auxiliaire 22. Ce générateur solaire 22 est relié à la batterie par l'intermédiaire d'un régulateur de charge (24) pouvant être de type classique. Il reçoit, sur des entrées 27 et 26, des signaux représentatifs de la tension aux bornes de la batterie et du courant qui traverse la batterie, de façon à éviter des courants et des tensions excessifs.

Dans une variante de réalisation, le générateur solaire auxiliaire est omis et la batterie est rechargée à partir de la barre de puissance.

L'alimentation de la barre de puissance par décharge de la batterie 20 est commandée par un ou des modules de décharge 28.

Enfin, un condensateur 30 placé entre les bornes positive et négative de la barre de puissance 10 permet d'absorber les transitoires provoqués par l'établissement de la rupture de l'alimentation de la barre à partir du générateur solaire.

La constitution générale décrite jusqu'ici est connue. Le condensateur utilisé a habituellement, pour des raisons de poids et de volume, une capacité qui ne dépasse pas quelques mF. En conséquence, il ne stocke qu'une énergie peu élevée et la stabilisation de la tension de la barre de puissance, lorsqu'elle est alimentée par des commutateurs en tout ou rien, exige une fréquence de fonctionnement très élevée des organes commutateurs.

Cela oblige dans la pratique à prévoir des modules 28 de décharge de la batterie à asservissement linéaire, donc ayant un mode de fonctionnement complètement différent du mode de commutation séquentiel des sections des sections du générateur solaire. Au surplus, la faible contribution du condensateur conduit à demander à la batterie un courant élevé lors des crêtes de consommation.

Ces inconvénients sont écartés ou au moins très atténués grâce au dispositif suivant l'invention.

Tout d'abord, le condensateur ou la batterie de condensateur de type classique utilisé jusqu'à présent, ayant une capacité de l'ordre du mF, est remplacé par un condensateur de capacité supérieure d'au moins deux ordres de grandeur. Sur un satellite, on utilisera en général une capacité comprise entre 0,1 F et 1 kF. On peut adopter des valeurs supérieures de la capacité lorsque les limitations de poids et de volume sont moins importantes que sur un satellite.

De plus, la liaison entre la batterie et la barre de puissance est effectuée par au moins un module de décharge suivant un mode tout ou rien, à cycle limite, similaire au mode de fonctionnement des commutateurs 16. Grâce à cette disposition, on assure la stabilité intrinsèque du dispositif et on assure l'homogénéité du mode de régulation.

Avantageusement, on utilisera plusieurs modules de décharge 28 constituant des générateurs de courant, qui tout à la fois assurent une redondance au moins partielle et permettent un échelonnement. Ces modules peuvent avoir tous la même puissance nominale, typiquement entre 500 W et 1 kW sur un satellite. Ils peuvent aussi avoir des puissances unitaires différentes. Grâce à l'effet de lissage donné par le condensateur 30, la cadence d'ouverture et de fermeture des modules peut être beaucoup plus réduite que dans un dispositif de l'art antérieur.

Chacun des modules de décharge 28 peut constituer un circuit élévateur de tension et la batterie est prévue de façon que sa force électromotrice et donc la différence de potentiel maximum à ses bornes reste toujours inférieure à la tension effective sur la barre d'alimentation, même lorsque cette tension a diminué à la fin d'un appel de courant excédant les possibilités du générateur solaire et de la batterie.

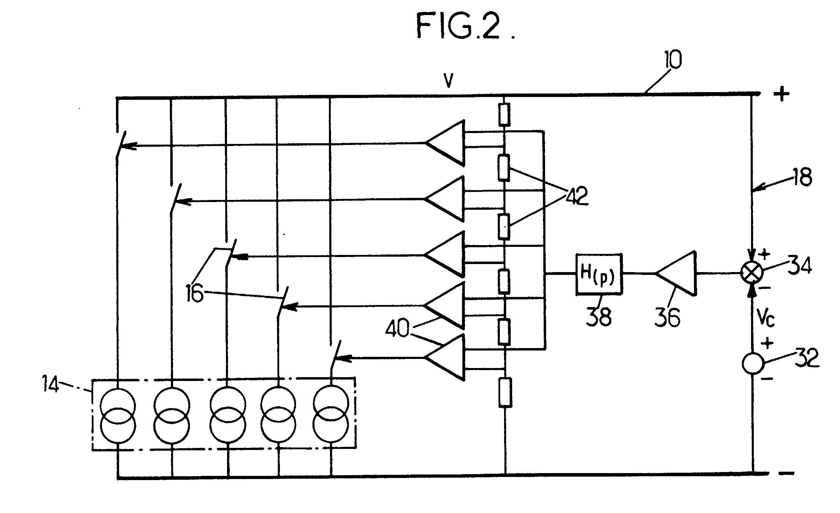

Le régulateur principal peut avoir la constitution représentée en figure 2, en ce qui concerne la commande des commutateurs 16.

Le régulateur 18 est destiné à maintenir une tension de consigne Vc sur la barre de puissance 10, sauf lorsque la puissance demandée au dispositif excède la capacité de fourniture cumulée du générateur solaire et de la batterie d'accumulateurs. Il comporte un générateur 32 de tension de référence et un comparateur 34 qui fournit, sur sa sortie, une tension d'erreur égale à la différence entre la tension effective V sur la barre et la tension de consigne Vc. Le signal d'erreur est porté à un niveau suffisant par un amplificateur 36 qui fournit un signal proportionnel à la différence entre V et Vc. Un filtre correcteur 38, par exemple de type PID, peut être prévu sur la sortie de l'amplificateur 36 pour réduire à une valeur pratiquement nulle l'erreur statique. Enfin, la tension d'erreur amplifiée et corrigée est appliquée à une batterie de comparateurs 40 commandant chacun un des commutateurs 16. Ces comparateurs reçoivent, sur une entrée, la tension d'erreur et, sur l'autre entrée, une tension différente pour chaque comparateur et fournie par une échelle de tension constituée par une série de résistances 42 placées en cascade. Les comparateurs de tension sont rendus actifs et désactivés de façon séquentielle en cas de variation de la tension V. Les sections du générateur solaire 14 peuvent avoir des puissances unitaires égales ou non.

Le mode de commande des modules de décharge 28 peut être similaire au précédent, si ce n'est que les commutateurs 16 sont remplacés par des modules élévateurs de tension 28 constituant des générateurs de courant constant, en dépit des variations de la tension V, notamment lorsque les générateurs solaires sont inopérants.

Le fonctionnement du dispositif qui vient d'être ici décrit est le suivant.

### Régime d'alimentation de la barre par le générateur solaire

Du fait que les commutateurs 16 fonctionnent en tout ou rien, le courant total fourni par les sections en service n'est en général pas identique au courant appelé au même instant par les charges 12a, ..., 12n. Si ce courant total est inférieur au courant demandé, le complément est fourni par le condensateur 30 qui se décharge. En même temps, la tension V tend à descendre au-dessous de la valeur de consigne Vc. Le signal d'erreur qui apparaît provoque la mise en service d'une section supplémentaire du générateur 14 par le régulateur 18. Le courant total fourni par le générateur solaire augmente et en général dépasse alors le courant appelé. Le condensateur 30 se charge et la tension V dépasse Vc jusqu'à provoquer la mise hors service de la section qui vient d'être mise en service. Le cycle précédent recommence alors.

Ce mode de fonctionnement est similaire à celui du dispositif de l'art antérieur décrits dans le document BE-A-853 124 ou US-A-4 186 336, si ce n'est que les cadences d'ouverture et de fermeture du commutateur sont beaucoup plus réduites, du fait que l'énergie stockée par le condensateur ou la batterie de condensateurs 30 est très supérieure. Dans la pratique, il suffit d'un condensateur de moins de 1 F pour ramener, dans un dispositif et des conditions représentatives de la situation à bord d'un satellite, la fréquence de commutation à une valeur inférieure à 10 Hz, permettant un fonctionnement optimum des commutateurs à état solide généralement prévu.

### Alimentation par la batterie et éventuellement le générateur solaire

Comme on l'a indiqué plus haut, les dispositifs de l'art antérieur exigent une régulation à asservissement linéaire du module ou des modules de décharge de la batterie sur la barre de puissance.

Dans le cas de l'invention, la batterie est reliée à la barre de puissance par plusieurs modules de décharge 28 fonctionnant en tout ou rien.

Chaque module de décharge 28 constitue une source de courant constant, qui est mise en service ou arrêtée de la même façon qu'une section du générateur solaire, sous la commande du régulateur 18. Mais cette mise en service des modules n'intervient que lorsque toutes les sections du générateur solaire sont en service et sont insuffisantes pour fournir le courant appelé. La mise en service des modules peut en conséquence être effectuée par des comparateurs placés en cascade avec ceux qui servent à la commande des sections du générateur solaire principal.

### Alimentation par le condensateur

Si la demande des charges dépasse ce que l'ensemble du générateur solaire et de la batterie peut fournir, la régulation ne peut être maintenue : le condensateur 30 fournit du courant et en même temps la tension de la barre diminue aussi longtemps que la puissance disponible reste insuffisante.

Lorsque la charge diminue, l'excédent de courant fourni par le générateur solaire 14 et par la batterie 20 par l'intermédiaire des modules 28 permet d'abord de recharger le condensateur 30, puis de rétablir la régulation et de recharger la batterie.

### Fonctionnement éventuel avec délestage

Le dispositif schématisé en figure 1 est destiné à l'alimentation de charges dont certaines, désignées par 12b et 12n, ne sont pas essentielles. Sur un satellite, il s'agit par exemple du contrôle thermique de la plate-forme ou de certains constituants actifs. Ces charges sont alors alimentées par l'intermédiaire d'un circuit de délestage 46 comportant des interrupteurs commandés par le régulateur 18. La commande peut s'effectuer par l'intermédiaire de portes ET 50, permettant de délester les charges non essentielles, suivant une séquence mémorisée dans le régulateur 18. Les entrées 52 constituent les commandes normales des charges provenant d'un organe de commande central.

Ainsi le délestage ne fait que constituer la suite logique de la séquence d'alimentation par le générateur solaire, puis par la batterie, lorsque la tension diminue encore.

L'invention est susceptible de nombreuses autres variantes de réalisation. Le mode de recharge de la batterie peut être différent de celui qui a été décrit. Plusieurs générateurs solaires peuvent être prévus. Les sections du générateur solaire peuvent avoir des puissances différentes entre elles et être commandées de façon que ce soit toujours la section de plus faible puissance qui est soumise au cyclage, ce qui implique une commutation de liaisons avec les comparateurs.

## Revendications

1. Dispositif d'alimentation électrique de charges ayant une barre de puissance (10), un générateur solaire (14) plusieurs sections individuellement connectables à la barre par des commutateurs et une batterie d'accumulateurs (20) reliée à la barre par des moyens lui permettant d'alimenter la barre, **caractérisé en ce que** la barre est reliée en permanence à un condensateur de stockage d'énergie (30) dit "super capacité" ayant une capacité d'au moins 0,1 F et **en ce que** lesdits moyens comprennent au moins un module de décharge (28) commandé en tout ou rien par un régulateur (18) qui commande également lesdits commutateurs.

2. Dispositif selon la revendication 1, **caractérisé en ce que** le condensateur a une valeur comprise entre un et plusieurs Farad.

3. Dispositif selon la revendication 1 ou 2, **caractérisé en ce qu'**il comprend plusieurs modules (28) commandés séquentiellement et constituant des générateurs de courant constant.

4. Dispositif selon la revendication 3, **caractérisé en ce que** les dits modules fonctionnent en élévateur de tension de la batterie.

5. Dispositif selon la revendication 4, **caractérisé en ce que** la force électromotrice de la batterie à pleine charge est inférieure à la plus basse tension acceptable sur la barre de puissance.

6. Dispositif selon l'une quelconque des revendications 1 à 5, **caractérisé en ce que** le régulateur est prévu pour mettre en service successivement des sections additionnelles du générateur solaire (14) puis des modules au fur et à mesure qu'ils sont nécessaires pour maintenir la tension de la barre de puissance à une valeur de consigne.

7. Dispositif selon la revendication 6, **caractérisé en ce que** le régulateur comporte des moyens pour fournir un signal d'erreur représentatif de la différence entre la tension courante sur la barre et une tension de référence et des comparateurs (40) de mise en service successive d'un nombre croissant de sections, puis des modules (28), suivant le signal d'erreur.

8. Dispositif selon l'une quelconque des revendications précédentes, **caractérisé en ce que** la batterie est alimentée à partir d'un générateur solaire auxiliaire, à travers un régulateur sensible à la tension aux bornes de la batterie et au courant qui la traverse.

9. Dispositif selon l'une quelconque des revendications précédentes, **caractérisé en ce que** le régulateur est prévu pour éliminer certaines des charges en séquence en réponse à une baisse de tension de la barre de puissance après mise en service de toutes les sections et de la batterie.

## Claims

1. An electrical power supply device for powering loads, the device having a power busbar (10), a solar generator (14) made up of a plurality of sections individually connectable to the busbar via switches, a storage battery (20) connected to the busbar via means enabling it to power the busbar, the device being **characterized in that** the busbar is permanently connected to an energy storage capacitor (30) called "super capacitor" having a capacitance of not less than 0.1 F, and **in that** said means comprise at least one discharge module (28) controlled in on/off mode by a regulator (18) which also controls said switches.

2. A device according to claim 1, **characterized in that** the capacitor has a capacitance lying in the range one to several farads.

3. A device according to claim 1 or 2, **characterized in that** it comprises a plurality of modules (28) controlled sequentially and constituting constant current generators.

4. A device according to claim 3, **characterized in that** said modules operate as battery voltage-raising modules.

5. A device according to claim 4, **characterized in that** the electromotive force of the battery, when fully charged, is less than the lowest acceptable voltage on the power busbar.

6. A device according to any one of claims 1 to 5, **characterized in that** the regulator is designed to bring additional sections of the solar generator (14) and then modules successively into service as they become necessary for maintaining the voltage on the power busbar at a reference value.

7. A device according to claim 6, **characterized in that** the regulator has means for supplying an error signal representative of the difference between the voltage on the busbar and a reference voltage, and comparators (40) for successively bringing into service an increasing number of sections and then of modules (28) depending on the error signal.

8. A device according to any preceding claim, **characterized in that** the battery is powered from an auxiliary solar generator via a regulator that is responsive to the voltage across the terminals of the battery and to the current passing therethrough.

9. A device according to any preceding claim, **characterized in that** the regulator is designed to eliminate certain loads sequentially in response to the voltage on the power busbar dropping after all of the sections and the battery have been put into service.

## Patentansprüche

1. Energieversorgungsvorrichtung für Lasten, mit einer Energieschiene (10), einem Solargenerator (14) In mehreren einzeln an die Energleschiene durch Schalter anschließbaren Abschnitten und einer Batterie (20), die an die Energieschiene durch Mittel angeschlossen ist, die es Ihr erlauben, die Energieschiene zu versorgen, **dadurch gekennzeichnet, dass** die Schiene ständig mit einem Energiespeicherkondensator (30), der "Superkapazität" genannt wird, mit einer Kapazität von mindestens 0,1 F verbunden ist und dass die Mittel mindestens ein Entlademodul (28) aufweisen, das von einem Regler (18) ein/aus-gesteuert wird, der auch die Schalter steuert.

2. Vorrichtung nach Anspruch 1, **dadurch gekennzeichnet, dass** der Kondensator einen Wert zwischen einem und mehreren Farad hat.

3. Vorrichtung nach Anspruch 1 oder 2, **dadurch gekennzeichnet, dass** sie mehrere Module (28) aufweist, die sequentiell gesteuert werden und Konstantstromgeneratoren bilden.

4. Vorrichtung nach Anspruch 3, **dadurch gekennzeichnet, dass** die Module als Spannungserhöher der Batterie fungieren.

5. Vorrichtung nach Anspruch 4, **dadurch gekennzeichnet, dass** die elektromotorische Kraft der Batterie bei voller Last kleiner als die niedrigste Spannung ist, die auf der Energieschiene akzeptabel ist.

6. Vorrichtung nach einem der Ansprüche 1 bis 5, **dadurch gekennzeichnet, dass** der Regler vorgesehen ist, um aufeinander folgend zusätzliche Abschnitte des Solargenerators (14) in Betrieb zu nehmen, und dann Module je nach ihrer Notwendigkeit, um die Spannung der Energieschiene auf einem Einstellwert zu halten.

7. Vorrichtung nach Anspruch 6, **dadurch gekennzeichnet, dass** der Regler Mittel aufweist, um ein Fehlersignal zu liefern, das den Unterschied zwischen der gegenwärtigen Spannung auf der Schiene und einer Referenzspannung darstellt, und Komparatoren (40) zur aufeinander folgenden Inbetriebnahme einer größer werdenden Anzahl von Abschnitten, und dann von Modulen (28), je nach dem Fehlersignal.

8. Vorrichtung nach einem der vorhergehenden Ansprüche, **dadurch gekennzeichnet, dass** die Batterie ausgehend von einem Hilfssolargenerator über einen Regler gespeist wird, der auf die Spannung an den Klemmen der Batterie und den sie durchlaufenden Strom reagiert.

9. Vorrichtung nach einem der vorhergehenden Ansprüche, **dadurch gekennzeichnet, dass** der Regler vorgesehen ist, um als Reaktion auf einen Spannungsabfall der Energieschiene nach der Inbetriebnahme aller Abschnitte und der Batterie bestimmte Lasten In einer Aufeinanderfolge zu eliminieren.
